# EUROPEAN PATENT SPECIFICATION

(11) **EP 3 292 712 B1**
(45) Date of publication and mention of the grant of the patent: **06.11.2019**
(21) Application number: 15760173.3
(22) Date of filing: 07.09.2015
(51) Int. Cl.: H04L 1/16, H04L 1/18, H04W 40/04, H04W 40/22, H04W 84/18, H04W 40/34, H04L 12/825, H04L 1/00, H04L 12/707

(54) **METHODS AND DEVICES FOR HANDLING DATA PACKET TRANSMISSIONS IN A MULTI-PATH MULTI-HOP ADAPTED WIRELESS COMMUNICATION NETWORK**
VERFAHREN UND VORRICHTUNGEN ZUR HANDHABUNG VON DATENPAKETÜBERTRAGUNGEN IN EINEM MEHRWEG- UND MULTI-HOP-ADAPTIERTEN DRAHTLOSKOMMUNIKATIONSNETZWERK
PROCÉDÉS ET DISPOSITIFS DE GESTION DE TRANSMISSIONS DE PAQUETS DE DONNÉES DANS UN RÉSEAU DE COMMUNICATION SANS FIL ADAPTÉ MULTI-CHEMINS ET MULTI-BONDS

(30) Priority: 06.05.2015 WO PCT/CN2015/078365
(43) Date of publication of application: 14.03.2018
(73) Proprietor: Telefonaktiebolaget LM Ericsson (publ), 164 83 Stockholm (SE)
(72) Inventor: BERGSTRÖM, Andreas, S-584 31 Linköping (SE); BERGLUND, Joel, S-58 333 Linköping (SE); HESSLER, Martin, S-587 58 Linköping (SE); FAN, Rui, Beijing 100102 (CN)
(74) Representative: Brann AB
(86) International application number: PCT/EP2015/070398
(87) International publication number: WO 2016/177435

(56) References cited:
- EP-A2- 2 012 457
- EP-A2- 2 012 458
- WO-A1-2006/024320
- TZU-MING LIN ET AL: "An Efficient Automatic Repeat Request Mechanism for Wireless Multihop Relay Networks", IEEE TRANSACTIONS ON VEHICULAR TECHNOLOGY, IEEE SERVICE CENTER, PISCATAWAY, NJ, US, vol. 62, no. 6, 31 July 2013 (2013-07-31), pages 2830-2839, XP011519197, ISSN: 0018-9545, DOI: 10.1109/TVT.2013.2248401
- WEIZHEN SUN ET AL: "Improvement for AODV Based on Backup Path Strategy", 2012 8TH INTERNATIONAL CONFERENCE ON WIRELESS COMMUNICATIONS, NETWORKING AND MOBILE COMPUTING (WICOM 2012) : SHANGHAI, CHINA, 21 - 23 SEPTEMBER 2012, IEEE, PISCATAWAY, NJ, 21 September 2012 (2012-09-21), pages 1-4, XP032342762, DOI: 10.1109/WICOM.2012.6478541 ISBN: 978-1-61284-684-2

## Description

### TECHNICAL FIELD

The proposed technology generally relates to methods, devices and computer programs for handling routing of data packets and transmissions of data packets in a multi-hop and multi-path multi-hop adapted wireless communication network.

### BACKGROUND

A recent development in the field of wireless communication technology is referred to as relay technology. Relay technology has been adopted in order to improve such features as coverage and performance of wireless networks such as Long Term Evolution networks, LTE-networks. The functionality of relay technologies is built on utilizing relay nodes to forward data packets from a source node to a target node. That is, a target node with the intention to transmit a data packet to a source node will instead of transmitting the data packet directly to the target node transmit the data packet to a relay node. The relay node in turn will forward the packet to either the source node, if that is deemed possible, or towards a second relay node. In the case where the data packet was transmitted to the second relay node, the second relay node will forward the packet to the source node, if deemed possible, or towards still another relay node. This procedure may continue until a final relay node is able to transmit the packet towards the target node. This is sometimes referred to as multi-hop transmission. A version of this is obtained by also incorporating a multi-path feature into the network. A multi-path feature enables a participating relay node to forward the data packets on several possible paths either towards the target node or towards another different relay node. The various paths in the multi-path enabled network may either be over distinct Radio Access Technologies, RATs, or over the same RAT but with some other distinct features characterizing the different paths. This is sometimes referred to as a multi-path multi-hop relay network. A positive feature of the data packet relay procedure is that it extends the coverage and improves the general performance of the system. It will in particular act to improve the cell throughput. A potential drawback of the described procedure is however that data packet losses or data packet corruption may occur due to signal fading or interferences. Data buffer overload in the relay nodes may also force the relay node to drop data packets which leads to data packet losses. An example of method for avoiding data buffer overload in the relay nodes is described in WO2006/024320A1.

### SUMMARY

It is an object of the proposed technology to provide mechanisms whereby at least some of the drawbacks of multi-hop transmissions and/or multi-hop multi path transmissions are countered. It is a particular object to provide methods and devices that enables transmissions over relay nodes that reduce the amount of data packet losses or data packet corruptions and that furthermore provides an effective routing of data packets over the participating relay nodes. These and other objects are met by embodiments of the proposed technology.

According to a first aspect, there is provided a method performed by a relay node in a wireless network adapted for multi-hop routing of data packets. The method comprises the step of storing a data packet received from a preceding relay node, PRN, in the network in a data packet buffer. The method also comprises the step of transmitting the buffered data packet towards a succeeding relay node, SRN, in the network. The method also comprises the step of receiving, from the SRN, a relay ACK message, RACK message associated to the transmitted data packet. The method also comprises the step of determining, based on the received RACK, whether to flush the data packet from the data packet buffer.

According to a second aspect there is provided a method performed by a relay node for handling data packet transmission in a wireless communication network configured for multi-path multi-hop routing. The method also comprises the step of receiving a data packet from a preceding relay node, PRN, in the wireless communication network. The method also comprises the step of transmitting the data packet towards a succeeding relay node, SRN, in the wireless communication network. The method also comprises the step of receiving a relay NACK message, RNACK message, associated with the data packet from the SRN. The method also comprises the step of forwarding at least one of the data packet and the RNACK message to a replacement relay node, RRN, different from the SRN.

According to a third aspect there is provided a relay node in a wireless network adapted for multi-hop routing of data packets. The relay node is configured to store a data packet received from a preceding relay node, PRN, in the network in a data packet buffer. The relay node is also configured to transmit the buffered data packet towards a succeeding relay node, SRN, in the network. The relay node is also configured to receive, from the SRN, a relay ACK message, RACK message associated to the transmitted data packet. The relay node is also configured to determine, based on the received RACK, whether to flush the data packet from the data packet buffer.

According to a fourth aspect there is provided a relay node configured to handle data packet transmission in a wireless communication network configured for multi-path multi-hop routing. The relay node is configured to receive a data packet from a preceding relay node, PRN, in the wireless communication network. The relay node is also configured to transmit the data packet towards a succeeding relay node, SRN, in the wireless communication network. The relay node is also configured to receive a relay NACK message, RNACK message, associated with the data packet from the SRN. The relay node is also configured to forward at least one of the data packet and the RNACK message to a replacement relay node, RRN, different from the SRN.

According to a fifth aspect there is provided a relay node in a wireless network adapted for multi-hop routing of data packets. The relay node comprises:
- a storing module for storing a data packet received from a preceding relay node, PRN, in the network in a data packet buffer;
- a controlling module for controlling transmissions of the buffered data packet towards a succeeding relay node, SRN, in the network;
- a reading module for reading a relay ACK message, RACK message associated to the transmitted data packet and originating from the SRN; and
- a processing module for determining, based on the received RACK, whether to flush the data packet from the data packet buffer.

According to a sixth aspect there is provided a relay node for handling data packet transmission in a wireless communication network configured for multi-path multi-hop routing. The relay node comprises:
- a reading module for reading a data packet originating from a preceding relay node, PRN, in the wireless communication network;
- a controlling module for controlling the transmission of a data packet towards a succeeding relay node, SRN, in the wireless communication network;
- a reading module for reading a relay NACK message, RNACK message, associated with the data packet and originating from the SRN;
- a controlling module for controlling forwarding of at least one of the data packet and the RNACK message to a replacement relay node, RRN, different from the SRN.

According to a seventh aspect there is provided a computer program comprising instructions, which when executed by at least one processor, cause the processor(s) to:
- store a data packet received from a preceding relay node, PRN, in a network in a data packet buffer;
- control transmission of the buffered data packet towards a succeeding relay node, SRN, in a network;
- read a relay ACK message, RACK message, associated to the transmitted data packet; and
- determine, based on the received RACK, whether to flush the data packet from the data packet buffer.

According to an eighth aspect there is provided a computer program comprising instructions, which when executed by at least one processor, cause the processor(s) to:
- read a data packet received from a preceding relay node, PRN, in a wireless communication network;
- control transmission of the data packet towards a succeeding relay node, SRN, in the wireless communication network;
- read a relay NACK message, RNACK message, associated with the data packet and originating from the SRN;
- control forwarding of at least one of the data packet and the RNACK message to a replacement relay node, RRN, different from the SRN.

According to a ninth aspect there is provided a computer program product comprising the computer program of seventh or eighth aspect.

### BRIEF DESCRIPTION OF THE DRAWINGS

The embodiments, together with further objects and advantages thereof, may best be understood by making reference to the following description taken together with the accompanying drawings, in which:
FIG. 1a is a schematic illustration of a number of relay nodes, A-G, in a multi-hop relay network, where also shown is a source node S and a target node T.
FIG. 1b is a schematic illustration of a number of relay nodes, A-G, in a multi-path multi-hop relay network.
FIG. 2 is a flow diagram illustrating an embodiment of the proposed technology.
FIG. 3 is a signaling diagram illustrating the signaling between three different relay nodes in a multi-hop relay network
FIG. 4 is a flow diagram illustrating an embodiment of a method for handling transmissions in a multi-path multi-hop relay network according to the proposed technology.
FIG. 5 is a signaling diagram illustrating the signaling between different relay nodes in the multi-path multi-hop relay network.
FIG. 6 is a block diagram illustrating a relay node according to the proposed technology.
FIG. 7 is a block diagram illustrating a relay node according to the proposed technology.
FIG. 8 is a is a block diagram illustrating a relay node according to the proposed technology
FIG. 9 is a is a block diagram illustrating a relay node according to the proposed technology
FIG. 10 is a block diagram illustrating the use of a computer program in a relay node according to the proposed technology.
FIG. 11 is a is a block diagram illustrating the use of a computer program in a relay node according to the proposed technology
FIG. 12 illustrates a particular embodiment of a relay node according to the proposed technology.

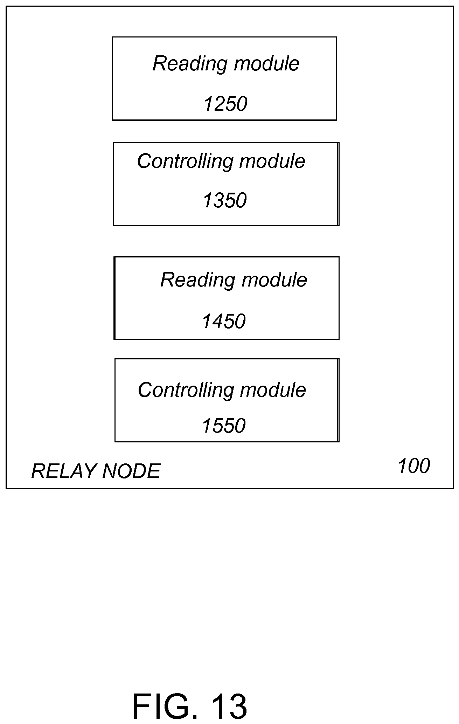

FIG. 13 illustrates a particular embodiment of a relay node according to the proposed technology.
FIG.14a is a schematic illustration of macro- and pico-radio base stations connected via backhaul radio links.
FIG.14b is a schematic illustration of Radio Link Control, RLC, operation.
FIG.15a is a schematic illustration of RLC segmentation of on RLC Service Data Unit, RLC SDU, in multiple RLC Protocol Data Units, RLC PDUs as well as the concatenation of multiple RLC SDUs into a single RLC PDU.
FIG.15b is an illustration on the RLC segmentation of one RLC PDU into two smaller RLC PDU segments.

### DETAILED DESCRIPTION

Throughout the drawings, the same reference designations are used for similar or corresponding elements.

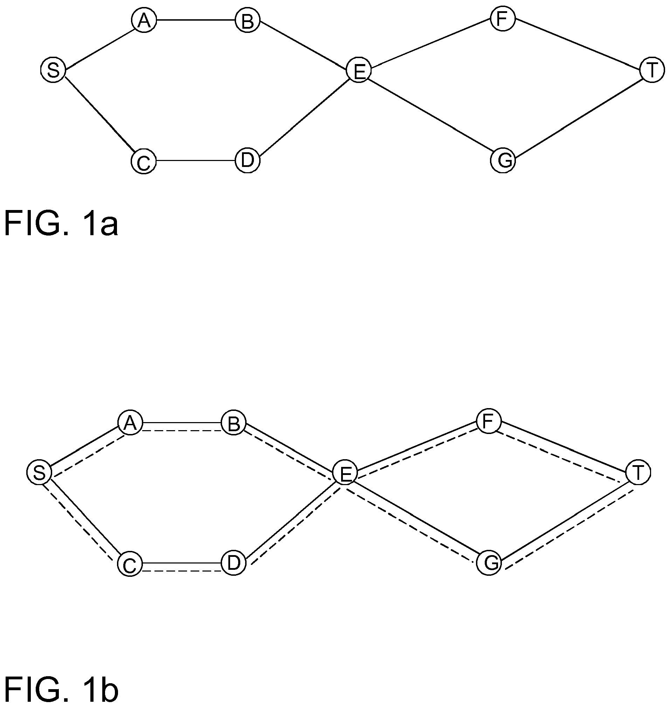

For a better understanding of the proposed technology, it may be useful to begin with a brief overview of the workings of a multi-hop relay network. Reference is made to FIG.1a. FIG.1a illustrates a simplified version of a multi path multi-hop relay network. Shown is a source node S and a target node T. There is also illustrated a number of relay nodes A - G over which data packets may be transmitted from the source node S to the target node T. It should be noted that the participating relay nodes are common network nodes, such as Radio Base Stations and User Equipments within the network that are configured to perform the task of relaying the data packets. A particular relay node may thus be considered to be the source node S, or the target node T, during some other transmission. The source node S and target node T may in the same way act as relay nodes during yet another transmission. Another possible relay network comprises a multi-hop relay network that also supports multi-path routing. It may e.g. be so that one relay node is connected to more than one other relay node, also referred to as. a multi-path network topology. The main difference between a multi-hop relay network and a multi path multi-hop relay network is that the relay nodes in the latter case are able to forward the data packets on several distinct paths. A schematic illustration of a multi-path multi-hop relay network is provided by FIG 1b. The dashed lines are intended to illustrate alternative paths between the relay nodes.

In FIG.1b, S is the source node and T is the target node. There are multiple potential paths between S and T as indicated by the dashed lines. Typically there is a routing protocol in place to select which path a given packet shall traverse from S to T. Still, when S sends packets to T, it has several choices. Either it sends one packet via only one of these paths, which is the classical approach. It may however also send multiple copies of this one data packet via multiple paths simultaneously. The former solution saves network resources, while the latter solution is more robust. The exact working of such a routing algorithms is deemed to be outside the scope of the present disclosure.

The workings of the relay network may briefly be described as follows:
The source node S aims to transmit a data packet, e.g. a Protocol Data Unit, PDU, to the target node T. Instead of trying to transmit it directly to the target node the source node transmit the data packet to a relay node, for example relay node A in FIG.1. Relay node A receives the data packet with instructions to forward it towards another relay node on the way to the target node. In FIG.1 it is relayed to relay node B that receives the packet and in turn forward it to relay node E. Relay node E may in the particular example illustrated in FIG.1 choose to relay the data packet either to relay node F or to relay node G to enable any of these node to make the final forwarding to the target node T. The relay nodes in the network may choose to issue a Relay Acknowledgement message, RACK message if the data packet was received uncorrupted. Hence, in this example, the data packet arrives at the target node via the rout S - A - B - E - F (or G) - T. This procedure by utilising intermediate relay nodes to transfer data from one node to another provides an efficient way to extend the coverage. The procedure is however prone to drawbacks relating to data packet losses or data packet corruption either by means of for example signal fading, since it relies on wireless transmissions, but also due to buffer overload along some of the relay nodes used for the transmission. That is, if a particular relay node has a data packet buffer that is full, or nearly full, the relay node may drop the data packet and hence disturb the rout between the source node and target node. Interrupted transmissions like these may trigger the relay node to issue a Negative Acknowledgement, NACK, to the preceding node. In other words, toward the node from which it received the data packet. The data packets way toward the target node has thus been interrupted and some alternative mechanism is needed to complete the transmission.

Particular ways to counter a problem like this depends on the behaviour of the relay nodes when forwarding the data packet towards another relay node. A first scenario relates to the case when the relay nodes forwards the data packet and then immediately flushes the data packet from the data buffer. The problem with this is that a single unsuccessful reception along the route towards the target node leads to a NACK that is transferred all the way back to the source node S since all the relay nodes used have flushed their buffers and thus are incapable of retransmitting the data packets. Hence a single issued NACK will necessitate a complete retransmission of the data packet from the source node.

To further highlight some possible drawbacks reference is made to the existing RelayARQ protocol, REF [2]. According to which any receiving intermediate/non-endpoint relay node, or equivalently a RLC entity, may transmit a RACK in response to a received data packet, such as a PDU. This informs the sending relay node not only that the reception of the data packet has been successful, but also that the receiving relay node will from now on take responsibility for this data packet and, if needed, perform retransmissions etc. in order to ensure its delivery to the final end-point receiving node, i.e. the target node.

An end-point/non-relay sending relay will, according to the protocol referred to above, take notion of the RACK in order to maintain the RLC AM guarantee-of-delivery towards the upper layers, but it will still continue to keep the data packet buffered until it is fully received by the other end-point receiving relay node, and the sending relay node will subsequently receive a regular ACK of this data packet.

For a sending relay node, two possibilities exist in how to react to a RACK of a given data packet:
- It may flush the data packet from its buffers - hence laying the responsibility of the delivery of the data packet to another relay node since this will save the amount of memory needed for buffering old data packets. The drawback with this approach is however that there will be only one relay node which has this data packet buffered and, in case this relay node leaves the network, the data packet need to be retransmitted all the way from the initial endpoint sending RLC entity. Also, in case another, more efficient path is created between the endpoints but not involving that relay node, the data packet is still forced to continue on that path, which from a performance perspective may not be optimal.
- Alternatively, it may keep the data packet in its data packets buffers until it receives an ACK for this data packet. This will provide more redundancy with respect to added/removed relay nodes since any node is capable of retransmitting the data packet if it receives a NACK. This will however be at the cost of excessive buffering in each relay node - the more number of hops there are in the remnant of the path from the node to the destination, the more packets may be outstanding and hence the more buffering is needed in the node. Besides, this will also cause one and the same PDU to be buffered in each and every node of the network, making the total need of buffering in the network excessively large.

As can be seen from the above there are several possible drawbacks that may either lead to direct data packet losses or put a lot of pressure on the sparse system resources since the same data packet may have to be stored in a number of nodes until the target node acknowledges that the data packet has been received uncorrupted and in readable shape. This is an inefficient use of the sparse buffer resources and may in turn negatively affect the overall cell throughput since data packets may be dropped due to overloaded data packet buffers.

The proposed technology aims to provide an alternative way to counter the problems relating to interrupted data transmissions in a multi-hop relay network and/or a multi-hop multi-path relay network. The alternative way enables the relay nodes to store a data packet to be forwarded during a prolonged time and provides a way to dynamically determine whether to flush the data packet from the buffer.

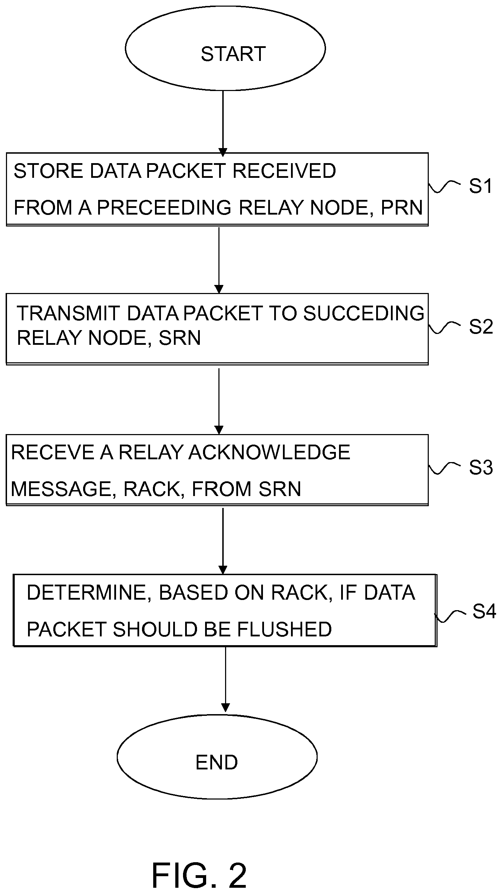

The proposed technology provides a method performed by a relay node in a wireless network adapted for multi-hop routing of data packets. The method comprises the step of storing S1 a data packet received from a preceding relay node, PRN, in the network in a data packet buffer. The method also comprises the step of transmitting S2 the buffered data packet towards a succeeding relay node, SRN, in the network. The method also comprises the step of receiving S3, from the SRN, a relay ACK message, RACK message associated to the transmitted data packet. The method also comprises the step of determining S4, based on the received RACK, whether to flush the data packet from the packet buffer. The method is illustrated in the flow diagram of FIG.2.

The proposed technology provides a mechanism whereby the data packet may be stored for a particular duration in order to ensure that a possible subsequent data packet loss or data packet corruption in the relay network does not necessitate a new retransmission of the data packet all the way from the source node. The method instead provides a way whereby a subsequent data packet loss or data packet corruption, which causes the issuance of a Negative Acknowledgement, NACK, message, may be countered by a retransmission of the data packet from the data packet buffer of a relay node that is close to the node issuing the NACK message. The proposed method moreover provides a way to determine whether the data packet should be flushed from the data packet buffer in order not to burden the buffer resources unnecessarily.

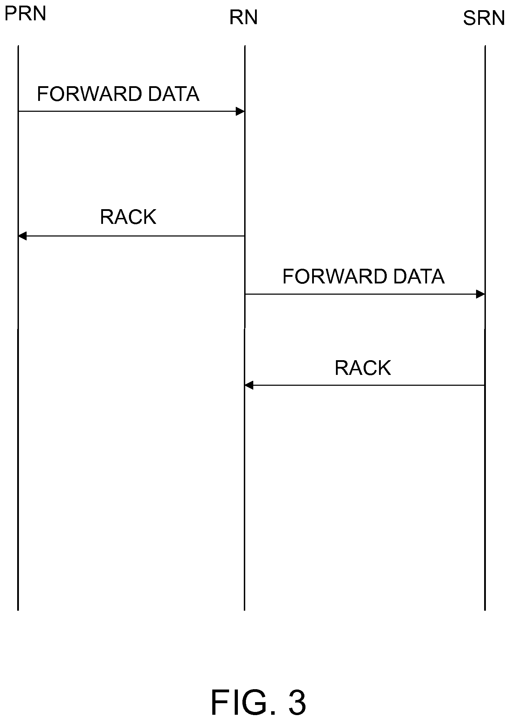

FIG.3 provides a schematic signaling diagram illustrating the overarching signaling of the participating relay nodes in the relay network. As can be inferred from the signaling diagram a preceding relay node, denoted PRN in FIG.3 transmits a data packet to the relay node. The preceding relay node, PRN, may be the source node but it may also be any other relay node within the relay network. The received data packet is acknowledged by means of an RACK message before being forwarded from the relay node towards a succeeding relay node, SRN. The SRN, in turn transmits a RACK message associated to the forwarded data packet back towards the relay node before the data packet is forwarded to yet another relay node, not shown in the drawing.

Particular advantages are faster and more efficient retransmissions and buffer handling in a multi-hop relay network. It should be noted that the proposed technology also could be used in the context of a multi-path multi-hop relay network, where it enables a greater robustness when one path fails since the data packet will be buffered in some intermediate relay node and therefore does not need to be retransmitted all the way from the source node.

The method proposes that the data packet is flushed from the data packet buffer based on a received Relay Acknowledgement message, RACK message. According to a particular embodiment of the proposed technology there is provided a method wherein it is determined to flush the data packet from the packet buffer if a timer, set with a predetermined time-out value upon receiving the RACK message, has expired.

By way of example, each relay node may be configured to keep a data packet, such as a PDU, buffered only for a limited amount of time, as determined by a preconfigured value T. Hence, after receiving a RACK on a data packet, such as a PDU, at time t=t₀, a timer T is started which may be set to expire at t=t₀+T. In this particular embodiment, when the above timer expires, i.e. is above or equal to the threshold value t₀+T, the data packet may be removed, flushed, from the buffer. According to a particular example, each transmission of a data packet, such as a PDU, may start a new timer.

An alternative embodiment of the proposed technology provides a method wherein it is determined to flush the data packet from the packet buffer based on information comprised in the received RACK message, the information providing a measure of the number of hops the RACK message been relayed. Hence if a RACK message has been relayed successfully over a number of relay nodes and this information is provided to the recipient of the RACK message, that is, the receiving relay node, the receiving relay node may have information the enables it to determine that the data packet should be flushed from the data packet buffer. A possible way to provide this information is to incorporate a counter in the RACK message. The counter is increased with one for each relay node that issued the RACK message. A relay node may then check the counter to determine how many relay nodes that have issued a RACK message for the corresponding data packet. The number obtained from the counter thus provides the measure of the number of hops the RACK message been relayed.

According to a particular example, each transmission of a data packet, such as a PDU, may re-initiate the counter procedure after receiving the RACK from the new receiver.

By way of example, the status message containing a RACK may be extended with a counter which is initiated with the value zero and then incremented one step for each hop the RACKs are relayed.

According to another particular example, the status messages containing a RACK may be extended with a counter which is initiated with a value larger than zero and then decremented one step for each hop the RACKs are relayed.

According to an exemplary embodiment there is provided a method wherein it is determined to flush the data packet from the buffer based on a comparison between the measure and a first pre-determined threshold value. The obtained measure may thus be compared with a first threshold value that is set to optimize the probability that the data packet may be flushed without the risk of receiving a subsequent RNACK as well as optimizing the use of the buffer resources. According to a particular example, a data packet, such as a PDU, may be removed from the buffer of the relay node receiving the RACK only if the counter is above, or possibly equal to, a certain first threshold value.

A non-limiting and purely illustrating example may be that the data packet is flushed if the RACK message has been relayed over three hops, that is, the data packet is stored in a data packet buffer of at least three other relay nodes.

According to still another embodiment of the proposed technology there is provide a method, wherein it is determined to relay the RACK message to the preceding relay node, PRN, based on a comparison between the measure and a second threshold value.

By way of example, the relay node receiving the status message comprising the RACK may further relay the RACK to the PRN only if the counter is below, or possibly equal to, a certain second threshold. The second threshold value may differ from the first threshold value that is used for determining whether to flush the data packet from the data packet buffer.

According to a particular example of the proposed technology there is provided a method wherein the first threshold value and the second threshold value is the same threshold value.

Having described various embodiments of a method that provides a way to counter the problems relating to interrupted data transmissions in a multi-hop relay network and/or a multi-hop multi-path relay network. In what follows it will be described a method for handling data packet transmission in a wireless communication network configured for multi-path multi-hop routing. The method may be performed by a relay node in a wireless communication network. The method enables a relay node to retransmit a data packet that was initially forwarded to a succeeding relay node, SRN, towards a replacement relay node, RRN, replacing the SRN, if a Relay Negative Acknowledgement message, RNACK message, is received from the SRN. A RNACK message refers to a novel kind of NACK message that is issued if a particular path(s) in the multi-path network has been removed, e.g. if a path between a relay node and a target node has been removed. Hence while a regular NACK message is used per hop to indicate a retransmission, a RNACK message indicates that the relay node is not able to forward the data packet through the intended path. The scenario where a path between the relay node and, e.g. the target node has been removed may make it impossible for the relay node to transfer the data packet to the target node unless another path can be used. The proposed method provides for a mechanism that will enable a redirection of the data packet along a different path towards the intended target node.

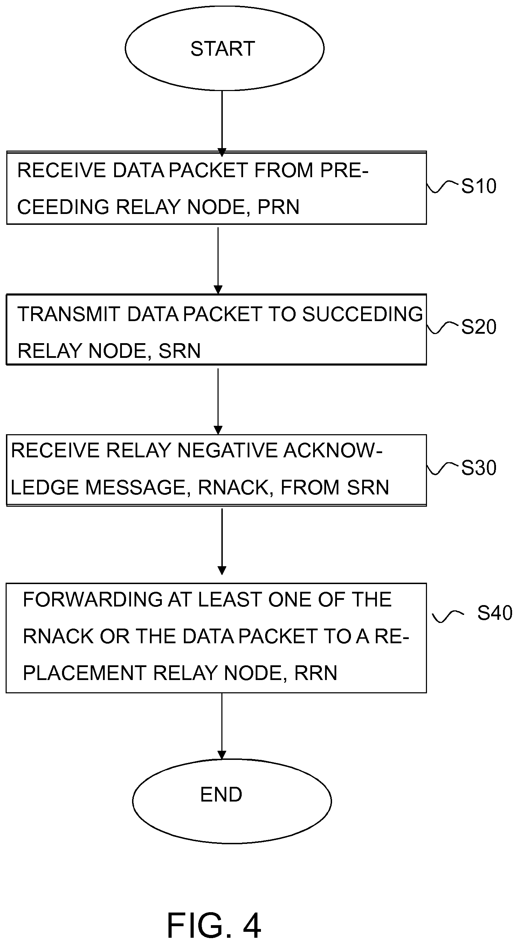

To this end, the proposed technology provides a method performed by a relay node for handling data packet transmission in a wireless communication network configured for multi-path multi-hop routing. The method comprises the step of receiving S10 a data packet from a preceding relay node, PRN, in the wireless communication network. The method also comprises the step of transmitting S20 the data packet towards a succeeding relay node, SRN, in the wireless communication network. The method also comprises the step of receiving S30 a relay NACK message, RNACK message, associated with the data packet from the SRN. The method also comprises the step of forwarding S40 at least one of the data packet and the RNACK message to a replacement relay node, RRN, different from the SRN. The method is schematically illustrated in the flow diagram of FIG.4.

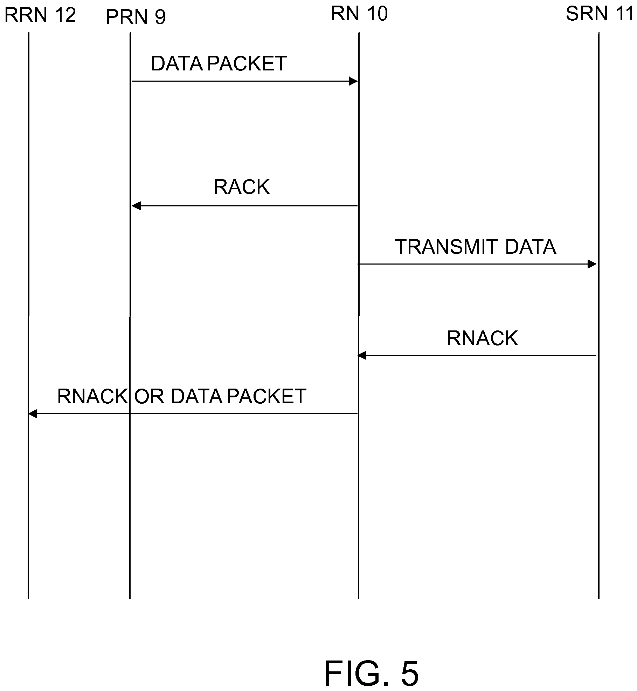

In slightly different words and with reference to the signaling diagram of FIG. 5, a relay node, RN, 10 receives S10 a data packet intended for a target node from a preceding relay node, PRN, 9. The relay node, RN, 10 transmits 20 the data packet towards a succeeding relay node, SRN, 11 to enable the SRN 11 to perform further transmissions of the data packet towards the target node. In case the data packet cannot be further transmitted from the SRN 11, due to i.e. that a path between the SRN 11 and a further node in the relay network has been removed, the SRN 11 issues a Negative Acknowledgement message, referred to as a relay NACK, RNACK, message to the relay node, RN, 10. Relay node, RN, 10 receives the RNACK associated to the data packet. Having received the RNACK message the relay node, RN, 10 will forward S40 at least one of the data packet or the RNACK to a new replacement relay node, RRN, 12 that is different from the SRN 11. Whether the RNACK message or the data packet is forwarded depends on the specific embodiment. Such embodiments will be described in what follows.

According to a particular embodiment of the proposed technology there is provided a method wherein the step S20 of transmitting the data packet further comprises to store the data packet in a data packet buffer for a specified duration and flush the data packet from the data packet buffer if the duration expired. The storing of the data packet for a specified duration will enable the relay node to forward the data packet subject to the received RNACK from the SRN to a replacement relay node, RRN.

According to another embodiment there is provided a method wherein the duration last until a pre-determined timer has expired wherein the timer is triggered when transmitting the data packet to the succeeding node.

This particular embodiment provides for an efficient use of the buffer resources as well as an efficient way to enable a redirection of a data packet subject to a RNACK message. The particular embodiment provides a way whereby a data packet is stored for a duration that optimizes the possibility that the data packet is present in the data packet buffer and ready to be retransmitted from the relay node when the RNACK is received. The embodiment also ascertains that the data packet is not stored for an unnecessarily long time, something that may negatively affect the relay nodes ability to receive new data packets.

According to yet another embodiment there is provided a method wherein the step S40 of forwarding the data packet comprises to retransmit the data packet stored in the data packet buffer to a replacement relay node, RRN, different from the SRN to enable the replacement relay node to relay the data packet onto another path towards an intended target node.

According to an optional and illustrating example a new RNACK code-point may be introduced in a status report. If a relay node A is transmitting a RNACK towards a relay node B this is done towards a relay node B that has previously transmitted the same data packet or segment and in some cases already been signaled with a RACK for the segment. The RNACK is interpreted as an indicator to retransmit this data packet/segment but not towards node A, as would be the case for a regular NACK. Instead this data packet shall be retransmitted towards some other node E representing an alternative path towards the target node T. In Figure 1b, an example can be that node E has transmitted a data packet to relay node F, but relay node F has lost the link towards the target node T and instead sends a RNACK to relay node E which will trigger relay node E to retransmit the data packet to G instead.

Still another embodiment of the proposed technology provides a method wherein the RRN comprises the PRN. That is the new relay node that replaces the SRN is the PRN from which the data packet originally arrived.

According to an alternative embodiment of the proposed technology there is provided a method wherein the step S40 of forwarding comprises to forward the RNACK message to the PRN, to enable the PRN to relay the data packet onto another path towards an intended target node if the PRN has not flushed its data packet buffer or enable the PRN to forward the RNACK message to still another new relay node if the preceding relay node has flushed its data packet buffer.

A further embodiment provides a method wherein the step S40 of forwarding comprises to forward the RNACK message to the preceding node if the specified duration has expired and the data packet been flushed from the data packet buffer.

According to particular exemplary embodiment there is provided a method wherein the step S40 of forwarding the data packet further comprises to flush the data packet from the data packet buffer. Hence, if an RNACK is received from the SRN, the relay node may forward the data packet to a replacement relay node, RRN, and then flush the data packet. The responsibility to store and possibly forward the data packet is thus left to the replacement node. This provides a dynamical means whereby it is ensured that data packets is not stored for too long in a particular relay nodes data packet buffer. The step S40 of forwarding the data packet may also comprise to convey information about which path the data came from to ensure that the RRN is able to avoid that particular path.

Below we will describe some technical background relating to the technology of Radio Link Control, RLC. This is done to provide some background to particular environments in which the proposed technology can be used. The examples are merely intended to be illustrative and should not be considered to limit the scope of the proposed technology. Further background relating to RLC architecture and functionality can be found in REF [1].

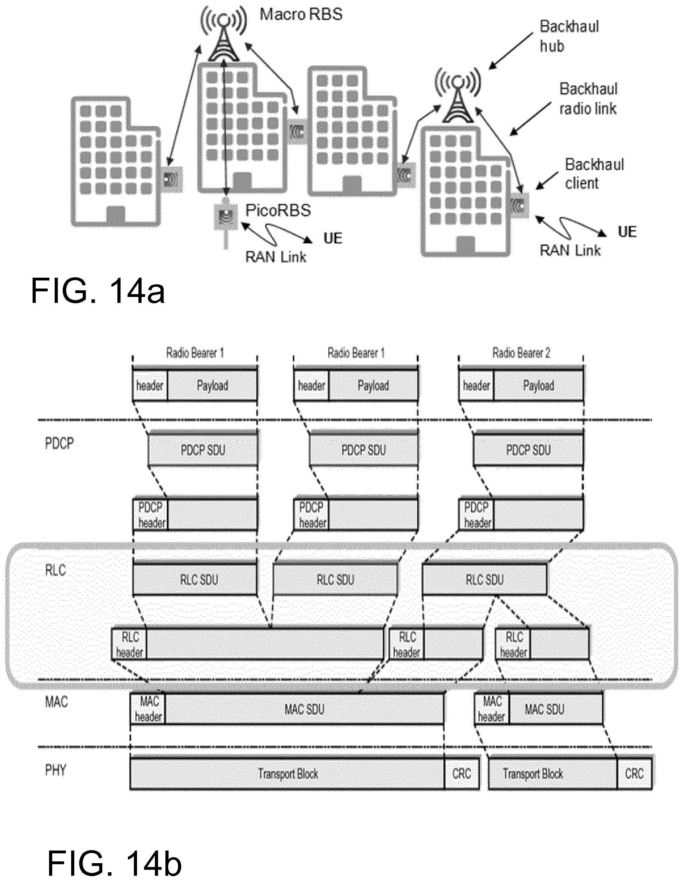

We start by briefly describing LTE Relaying in a HetNet Scenario, references is made to FIG. 14a which illustrates Macro and Pico radio base stations connected via backhaul radio links. A small cell dense urban heterogeneous outdoor deployment scenario where macro base stations are located above rooftop and the small RBS, called pico in the figure, are located on building walls or lamp posts below rooftop is illustrated in Figure 14a. A User Equipment, UE, e.g. a mobile/cellular phone, is using a Radio Access Network (RAN) service to access the mobile network services. The pico radio base station, picoRBS, may provide one or a combination of several radio access technologies over the radio access link, e.g. 3GPP LTE, 3GPP HSPA, 3GPP GSM or IEEE 802.11x ("WiFi"). The picoRBS needs to backhaul the RAN traffic to the mobile network, and uses a wireless link for this. A client is defined as the part of the picoRBS which communicates with the hub through the wireless backhaul. The hub is defined as the part of the macro RBS which communicates with the client through the wireless backhaul. Note that the pico and client do not have to be co-located. The same applies for the hub and macro. The wireless link may be implemented by means of two terminals on both sides of this link "A" and "B". On the hub side, traffic terminated on terminal B is forwarded to the mobile backhaul network via e.g. a fixed link over copper or fiber media. The wireless links between picoRBSs and hubs can be realized using various technologies, e.g. LTE and Microwave. In case the wireless link is implemented using normal microwave, then terminals A and B will be typical to microwave solutions. In case the wireless link is implemented using LTE backhauling, terminal A will typically be implemented by using a UE embedded into the picoRBS "p". This UE is referred to as a "Client". On the hub side then, terminal B will act as a RBS. LTE backhauling can be carried either over normal IMT-bands, e.g. on 2.6 GHz, in which case we are using 3GPP standard LTE in-band or out-of-band relaying, or by running LTE baseband on higher radio frequencies, such as e.g. 28 GHz. LTE backhauling implies that the picoRBSs are connected to a client which is used to create a link to the hub. Note that in the examples above, there could be several backhaul hops.

We proceed by providing an overview of RLC. References is made to FIG. 14b. The RLC protocol as described in REF [1] is responsible for segmentation/concatenation of (header-compressed) IP packets, also known as RLC SDUs, from the PDCP into suitably sized RLC PDUs. It also handles retransmission of erroneously received PDUs, as well as removal of duplicated PDUs. Finally, the RLC ensures in-sequence delivery of SDUs to upper layers. These aspects are all illustrated in FIG. 14b.

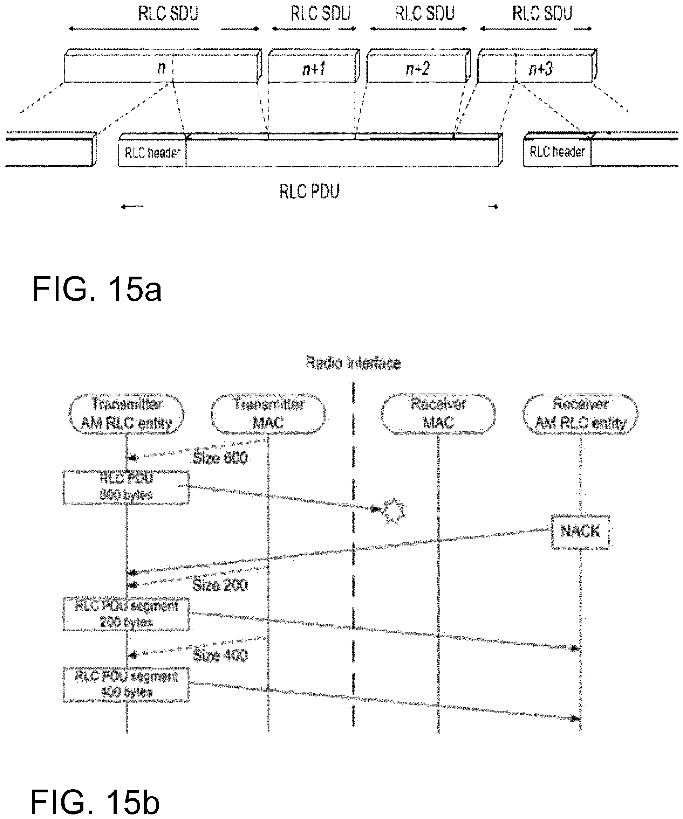

Let us further briefly describe the segmentation/concatenation of RLC, which works as follows:
- A certain amount of data is selected for transmission from the RLC SDU buffer and the SDUs are segmented and/or concatenated to create the RLC PDU. Thus, for LTE the RLC PDU size varies dynamically.
- In each RLC PDU, a header is included, containing, among other things, a sequence number used for in-sequence delivery and by the retransmission mechanism. FIG. 15a illustrates the RLC segmentation of one RLC SDU in multiple RLC PDUs as well as the concatenation of multiple RLC SDUs in one single RLC PDU.

Furthermore, it may happen that a retransmission will take place using another RLC PDU size than the initial transmission as forced by e.g. MAC-level decisions on link-adaptation, scheduling etc. In such case, the original RLC PDU is re-segmented, i.e. broken up into smaller parts.

Below follows a brief overview of RelayARQ. RelayARQ as a concept as described in REF [2] and has originated as a way for improving RLC relay operation as illustrated in FIG.16a which shows a schematic RLC relay setup. When using RelayARQ, the RLC entities in each relay node does not terminate each link - which would then cause a cascade of isolated hops - but instead, each node uses the same sequence numbering, RLC PDU size, protocol state etc. Furthermore, state information is re-used and exchanged beyond the preceding link. The temporary retransmission responsibility is delegated from the sender node step-wise from node to node until finally the data unit is received at the receiver. However, the ultimate retransmission responsibility remains with the sender node. This has two positive consequences:
- First, retransmissions are in normal cases only performed at the link where the transmission error occurred.
- Second, the sender with its ultimate retransmission responsibility acts as an outer loop ARQ protocol as it provides a fallback state for error recovery. This means, a layered concept can be avoided.

Having described a number of embodiments of the proposed methods, in what follows there will be described embodiments of relay nodes configured to perform the described methods. All advantages that can be obtained with the proposed methods are equally provided by the proposed relay nodes.

The proposed technology provides a relay node 10 in a wireless network adapted for multi-hop routing of data packets. The relay node 10 is configured to store a data packet received from a preceding relay node, PRN, 9 in the network in a data packet buffer. The relay node 10 is also configured to transmit the buffered data packet towards a succeeding relay node, SRN, 11 in the network. The relay node 10 is also configured to receive, from the SRN 11, a relay ACK message, RACK message associated to the transmitted data packet. The relay node 10 is also configured to determine, based on the received RACK, whether to flush the data packet from the data packet buffer.

According to a particular embodiment of the proposed technology there is provided a relay node 10, wherein the relay node 10 is configured to flush the data packet from the data packet buffer if a timer, set with a predetermined time-out value upon receiving said RACK message, has expired.

According to another embodiment of the proposed technology there is provided a relay node 10 wherein the relay node 10 is configured to flush the data packet from the data packet buffer based on information comprised in the received RACK message, the information providing a measure of the number of hops the RACK message been relayed.

According to yet another embodiment of the proposed technology there is provided a relay node 10 wherein the relay node 10 is configured to flush the data packet from the buffer based on a comparison between the measure and a first pre-determined threshold value.

According to still another embodiment of the proposed technology there is provided a relay node 10 wherein the relay node 10 is configured to relay the RACK message to the PRN based on a comparison between the measure and a second threshold value.

According to an optional embodiment of the proposed technology there is provided a relay node 10 wherein the first threshold value and the second threshold value is the same threshold value.

In a particular example, the relay node 10 comprises a processor 120 and a memory 130, the memory comprising instructions executable by the processor, in order to control the relay.

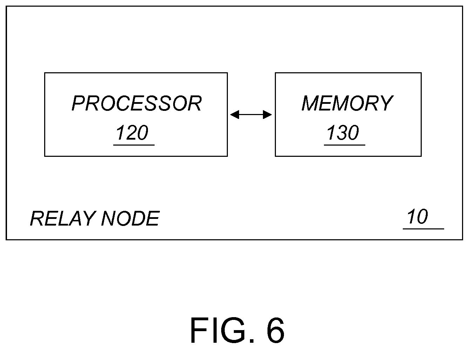

FIG. 6 is a schematic block diagram illustrating an example of a relay node 10 comprising a processor 120 and an associated memory 130.

In this particular example, at least some of the steps, functions, procedures, modules and/or blocks described herein are implemented in a computer program, which is loaded into the memory for execution by processing circuitry including one or more processors. The processor(s) and memory are interconnected to each other to enable normal software execution. An optional input/output device may also be interconnected to the processor(s) and/or the memory to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described herein.

The processing circuitry does not have to be dedicated to only execute the above-described steps, functions, procedure and/or blocks, but may also execute other tasks.

Optionally, network node or relay node 10 may also include communication circuitry. The communication circuitry may include functions for wired and/or wireless communication with other devices and/or network nodes in the network. In a particular example, relay node 10 may include radio circuitry for communication with one or more other nodes, including transmitting and/or receiving information. The communication circuitry may be interconnected to the processor and/or memory. A relay node 10 comprising communication circuitry 110, a processor 120 and a memory 130 is shown in FIG.6.

The proposed technology provides a relay node 100 configured to handle data packet transmission in a wireless communication network configured for multi-path multi-hop routing. The relay node 100 is configured to receive a data packet from a preceding relay node, PRN, 9 in the wireless communication network. The relay node 100 is also configured to transmit the data packet towards a succeeding relay node, SRN, 11 in the wireless communication network. The relay node 100 is also configured to receive a relay NACK message, RNACK message, associated with the data packet from the SRN 11. The relay node is also configured to forward at least one of the data packet and the RNACK message to a replacement relay node, RRN, 12 different from the SRN 11.

According to a particular embodiment of the proposed technology there is provided a relay node 100 wherein the relay node 100 is further configured to store the data packet in a data packet buffer for a specified duration and flush the data packet from the data packet buffer if the duration expired.

According to a particular embodiment of the proposed technology there is provided a relay node 100 wherein the relay node 100 is configured to store the data packet for a duration that last until a predetermined timer has expired wherein said timer is triggered when transmitting said data packet to said succeeding node.

According to a particular embodiment of the proposed technology there is provided a relay node 100 wherein the relay node 100 is configured to forward the data packet by retransmitting the data packet stored in the data packet buffer to a replacement relay node, RRN, 12 different from the SRN 11 to enable the replacement relay node, RRN, 12 to relay the data packet onto another path towards an intended target node.

According to a particular embodiment of the proposed technology there is provided a relay node 100 wherein the replacement relay node, RRN, 12 comprises the PRN 9.

According to a particular embodiment of the proposed technology there is provided a relay node 100 wherein the relay node 100 is configured to forward the RNACK message to the PRN 9 to enable the PRN 9 to relay the data packet onto another path towards an intended target node if the PRN 9 has not flushed its data packet buffer or enable the PRN 9 to forward the RNACK message to still another replacement relay node, RRN, 12 if the PRN 9 has flushed its data packet buffer.

According to a particular embodiment of the proposed technology there is provided a relay node 100 wherein the relay node 100 is configured to forward the RNACK message to the PRN 12 if the specified duration has expired and the data packet been flushed from the data packet buffer.

According to a particular embodiment of the proposed technology there is provided a relay node 100 wherein the relay node 100 is configured to flush the data packet from the data packet buffer after having forwarded the data packet.

In a particular example, the relay node 100 comprises a processor 1200 and a memory 1300, the memory comprising instructions executable by the processor, whereby the relay node is adapted to handle data packet transmission in a wireless communication network configured for multi-path multi-hop routing.

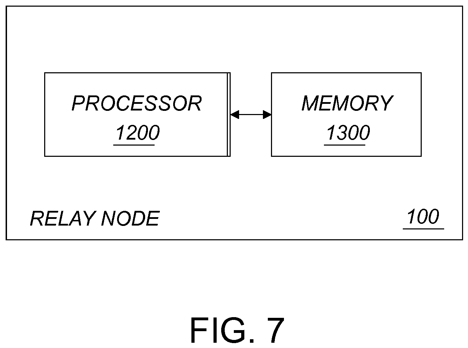

FIG. 7 is a schematic block diagram illustrating an example of a relay node 100 comprising a processor 1200 and an associated memory 1300.

In this particular example, at least some of the steps, functions, procedures, modules and/or blocks described herein are implemented in a computer program, which is loaded into the memory for execution by processing circuitry including one or more processors. The processor(s) and memory are interconnected to each other to enable normal software execution. An optional input/output device may also be interconnected to the processor(s) and/or the memory to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described herein.

The processing circuitry does not have to be dedicated to only execute the above-described steps, functions, procedure and/or blocks, but may also execute other tasks.

The proposed technology may be applied to a user terminal, which may be a wired or wireless device.

As used herein, the non-limiting terms "User Equipment" and "wireless device" may refer to a mobile phone, a cellular phone, a Personal Digital Assistant, PDA, equipped with radio communication capabilities, a smart phone, a laptop or Personal Computer, PC, equipped with an internal or external mobile broadband modem, a tablet PC with radio communication capabilities, a target device, a device to device UE, a machine type UE or UE capable of machine to machine communication, iPAD, customer premises equipment, CPE, laptop embedded equipment, LEE, laptop mounted equipment, LME, USB dongle, a portable electronic radio communication device, a sensor device equipped with radio communication capabilities or the like. In particular, the term "UE" and the term "wireless device" should be interpreted as non-limiting terms comprising any type of wireless device communicating with a radio network node in a cellular or mobile communication system or any device equipped with radio circuitry for wireless communication according to any relevant standard for communication within a cellular or mobile communication system.

As used herein, the non-limiting term "radio network node or network node" may refer to base stations, network control nodes such as network controllers, radio network controllers, base station controllers, and the like. In particular, the term "base station" may encompass different types of radio base stations including standardized base stations such as Node Bs, or evolved Node Bs, eNBs, and also macro/micro/pico radio base stations, home base stations, also known as femto base stations, relay nodes, repeaters, radio access points, base transceiver stations, BTSs, and even radio control nodes controlling one or more Remote Radio Units, RRUs, or the like.

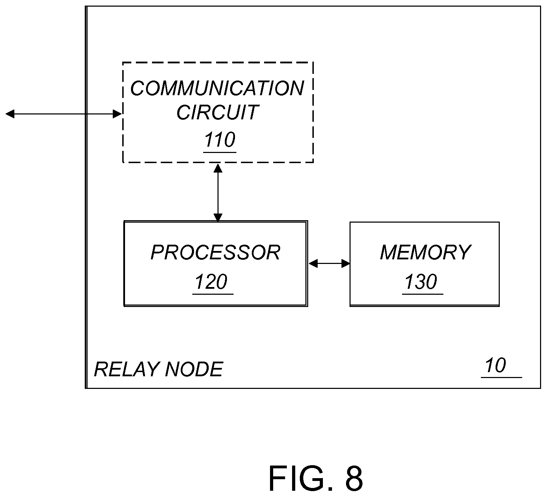

Optionally, network node or relay node 100 may also include communication circuitry. The communication circuitry may include functions for wired and/or wireless communication with other devices and/or network nodes in the network. In a particular example, the relay node may include radio circuitry for communication with one or more other nodes, including transmitting and/or receiving information. The communication circuitry may furthermore be interconnected to the processor and/or the memory. FIG.8 is a schematic illustration of such a relay node 100.

It will be appreciated that the methods and devices described herein can be combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Alternatively, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

A possible embodiment of the proposed technology provides a computer program for performing the tasks of the proposed method.

It is therefore provided a computer program 131 comprising instructions, which when executed by at least one processor, cause the processor(s) to:
- store a data packet received from a preceding relay node, PRN, in a network in a data packet buffer;
- control transmission of the buffered data packet towards a succeeding relay node, SRN, in a network;
- read, a relay ACK message, RACK message associated to said transmitted data packet; and
- determine, based on the received RACK, whether to flush the data packet from the data packet buffer.

The proposed technology also provides a computer-program product comprising a computer-readable medium having stored thereon the computer program.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

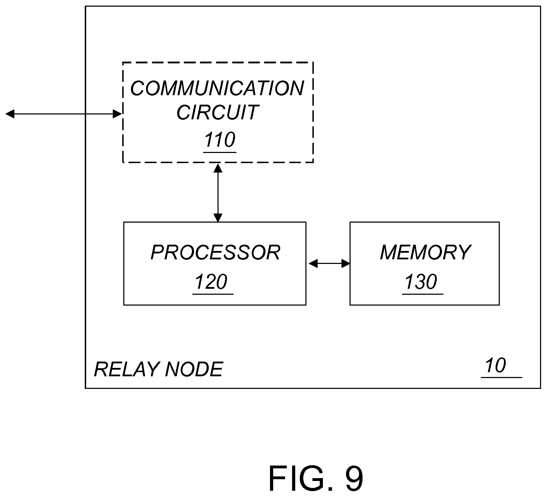

FIG.9 is schematic illustration of how a computer program 131, carried on a computer program product is utilized in a relay node 10.

A possible embodiment of the proposed technology provides a computer program for performing the tasks of the proposed method.

It is therefore provide a computer program 1310 comprising instructions, which when executed by at least one processor, cause the processor(s) to:
- read a data packet received from a preceding relay node, PRN, in a wireless communication network;
- control transmission of the data packet towards a succeeding relay node, SRN, in the wireless communication network;
- read a relay NACK message, RNACK message, associated with said data packet said RNACK message originating from said SRN;
- control forwarding of at least one of the data packet and the RNACK message to a replacement relay node, RRN, different from the SRN.

The proposed technology also provides a computer-program product comprising a computer-readable medium having stored thereon the computer program.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

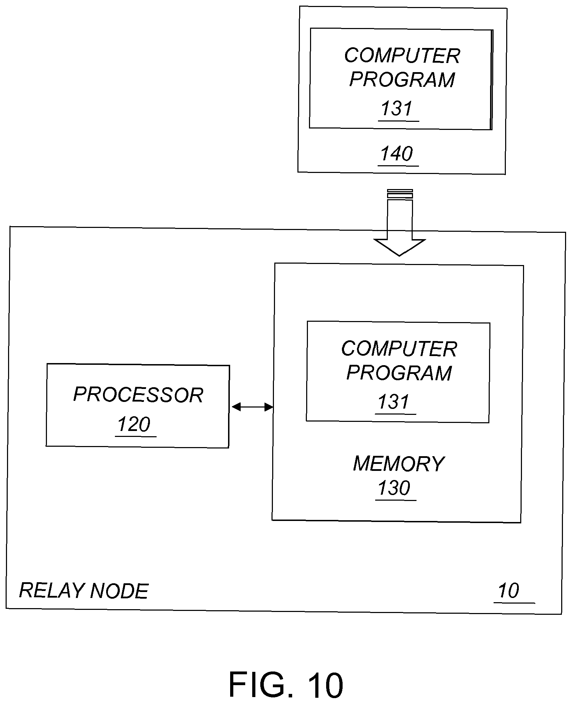

FIG.10 is schematic illustration of how a computer program 1310, carried on a computer program product is utilized in a relay node 100.

By way of example, the software or computer program may be realized as a computer program product, which is normally carried or stored on a computer-readable medium, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The flow diagram or diagrams presented herein may therefore be regarded as a computer flow diagram or diagrams, when performed by one or more processors. A corresponding relay node 10 may be defined as a group of function modules, where each step performed by the processor corresponds to a function module. In this case, the function modules are implemented as a computer program running on the processor. Hence, the relay node 10 may alternatively be defined as a group of function modules, where the function modules are implemented as a computer program running on at least one processor.

The computer program residing in memory may thus be organized as appropriate function modules configured to perform, when executed by the processor, at least part of the steps and/or tasks described herein. Figure Y is a schematic block diagram illustrating an example of a relay node 10 comprising a group of function modules.

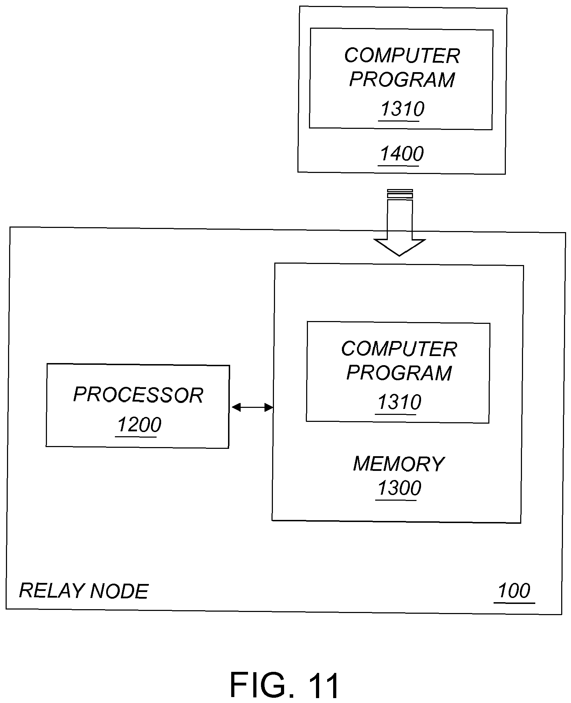

FIG.11 shows a relay node 10 in a wireless network adapted for multi-hop routing of data packets. The relay node 10 comprises:
- a storing module 125 for storing a data packet received from a preceding relay node, PRN, in the network in a data packet buffer;
- a controlling module 135 for controlling transmissions of the buffered data packet towards a succeeding relay node, SRN, in the network;
- a reading module 145 for reading a relay ACK message, RACK message associated to the transmitted data packet and originating from the SRN; and
- a processing module 155 for determining, based on the received RACK, whether to flush the data packet from the data packet buffer.

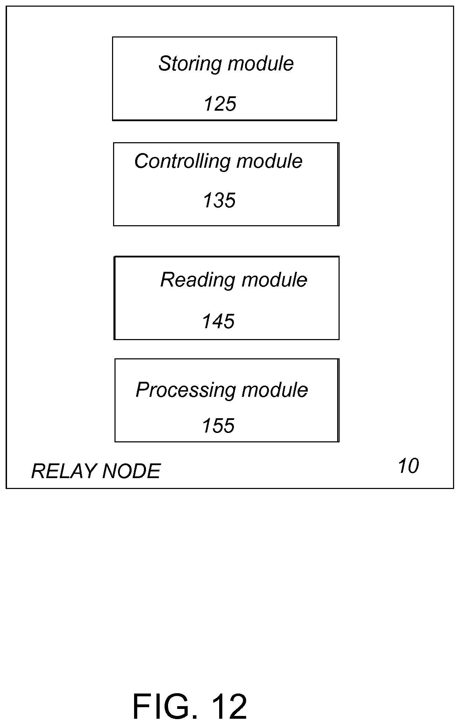

FIG.12 shows a relay node 100 for handling data packet transmission in a wireless communication network configured for multi-path multi-hop routing. The relay node 100 comprises:
- a reading module 1250 for reading a data packet originating from a preceding relay node, PRN, in the wireless communication network;
- a controlling module 1350 for controlling the transmission of a data packet towards a succeeding relay node, SRN, in the wireless communication network;
- a reading module 1450 for reading a relay NACK message, RNACK message, associated with the data packet and originating from the SRN;
- a controlling module 1550 for controlling forwarding of at least one of the data packet and the RNACK message to a replacement relay node, RRN, different from the SRN.

Alternatively it is possibly to realize the modules in Figure 11 and 12 predominantly by hardware modules, or alternatively by hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs). The extent of software versus hardware is purely implementation selection.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

### ABBREVIATIONS

- 3GPP: 3rd Generation Partnership Project
- ACK: Acknowledgement (in ARQ protocols)
- AM: Acknowledged Mode (RLC configuration)
- ARQ: Automatic Repeat-reQuest
- ERR: Error
- GSM: Global System for Mobile Communications
- HSPA: High Speed Packet Access
- IEEE: Institute of Electrical and Electronics Engineers
- IP: Internet Protocol
- LTE: Long Term Evolution
- MAC: Medium Access Control
- MME: Mobility Management Entity
- NACK: Negative Acknowledgement (in ARQ protocols)
- PDCP: Packet Data Convergence Protocol
- PDU: Protocol Data Unit
- RACK: Relay ACK
- ROK: Relay OK
- RAN: Radio Access Network
- RBS: Radio Base Station
- RLC: Radio Link Control
- RRC: Radio Resource Control
- SDU: Service Data Unit
- UE: User Equipment
- UM: Unacknowledged Mode (RLC configuration)
- VoIP: Voice over IP
- WiFi: Wireless Fidelity

### REFERENCES

*[1]* TS 36.322 - EVOLVED UNIVERSAL TERRESTRIAL RADIO ACCESS (E-UTRA); RADIO LINK CONTROL (RLC) PROTOCOL SPECIFICATION (PUBLISHED: 2015-03-23*)*
*[2]* H. WIEMANN, M. MEYER, R. LUDWIG, C. PAE O, "A NOVEL MULTI-HOP ARQ CONCEPT", VEHICULAR TECHNOLOGY CONFERENCE, 2005. VTC 2005-SPRING. 2005 IEEE 61 ST (VOLUME:5*)*

## Claims

1. A method performed by a relay node in a wireless network adapted for multi-hop routing of data packets, the method comprises the steps of:
- storing S1 a data packet received from a preceding relay node, PRN, in the network in a data packet buffer;
- transmitting S2 the buffered data packet towards a succeeding relay node, SRN, in the network;
- receiving S3, from the SRN, a relay ACK message, RACK message associated to said transmitted data packet; and
- determining S4, based on the received RACK, whether to flush the data packet from the data packet buffer
the method being **characterised by** that it is determined to flush said data packet from the data packet buffer if a timer, set with a predetermined time-out value upon receiving said RACK message, has expired.

2. The method according to claim 1, wherein it is determined to flush said data packet from the data packet buffer based on information comprised in the received RACK message, said information providing a measure of the number of hops said RACK message been relayed.

3. The method according to claim 2, wherein it is determined to flush said data packet from the buffer based on a comparison between said measure and a first pre-determined threshold value.

4. The method according to claim 3, wherein it is determined to relay the RACK message to the PRN based on a comparison between said measure and a second threshold value.

5. The method according to claim 4, wherein said first threshold value and said second threshold value is the same threshold value.

6. A relay node (10) in a wireless network adapted for multi-hop routing of data packets, wherein the relay node (19) is:
- configured to store a data packet received from a preceding relay node., PRN, in the network in a data packet buffer; and
- configured to transmit the buffered data packet towards a succeeding relay node, SRN, in the network; and
- configured to receive, from the SRN, a relay ACK message, RACK message associated to said transmitted data packet; and
- configured to determine, based on the received RACK, whether to flush the data packet from the data packet buffer.
the relay node being **characterized by** being configured to flush said data packet from the data packet buffer if a timer, set with a predetermined time-out value upon receiving said RACK message, has expired.

7. The relay node according to claim 9, wherein the relay node (10) is configured to flush said data packet from the data packet buffer based on information comprised in the received RACK message, said information providing a measure of the number of hops said RACK message been relayed.

8. The relay node according to claim 7, wherein the relay node (10) is configured to flush said data packet from the buffer based on a comparison between said measure and a first pre-determined threshold value.

9. The relay node according to claim 8, wherein the relay node (10) is configured to relay the RACK message to the PRN based on a comparison between said measure and a second threshold value.

10. Relay node according to claim 9, wherein said first threshold value and said second threshold value is the same threshold value.

## Patentansprüche

1. Verfahren, durchgeführt durch einen Weitergabeknoten in einem Drahtlosnetzwerk, ausgelegt für Multi-Hop-Routing von Datenpaketen, wobei das Verfahren die folgenden Schritte umfasst:
- Speichern S1 eines Datenpakets, das von einem vorhergehenden Weitergabeknoten (PRN) in dem Netzwerk in einem Datenpaketzwischenspeicher empfangen wird;
- Übertragen S2 des zwischengespeicherten Datenpakets zu einem nachfolgenden Weitergabeknoten (SRN) in dem Netzwerk;
- Empfangen S3 einer Weitergabe-ACK-Nachricht (RACK-Nachricht), die dem übertragenen Datenpaket zugeordnet ist, von dem SRN; und
- Bestimmen S4, auf Grundlage der empfangenen RACK, ob das Datenpaket aus dem Datenpaketzwischenspeicher geleert werden soll,
wobei das Verfahren **dadurch gekennzeichnet ist, dass** bestimmt wird, das Datenpaket aus dem Datenpaketzwischenspeicher zu leeren, wenn ein Timer, der mit einem vorbestimmten Zeitlimitwert beim Empfangen der RACK-Nachricht gesetzt wird, abgelaufen ist.

2. Verfahren nach Anspruch 1, wobei auf Grundlage von Informationen, die in der empfangenen RACK-Nachricht enthalten sind, bestimmt wird, das Datenpaket aus dem Datenpaketzwischenspeicher zu leeren, wobei die Informationen einen Größenwert der Anzahl von Hops, die die RACK-Nachricht weitergegeben wurde, bereitstellen.

3. Verfahren nach Anspruch 2, wobei auf Grundlage eines Vergleichs zwischen dem Größenwert und einem ersten vorbestimmten Schwellenwert bestimmt wird, das Datenpaket aus dem Zwischenspeicher zu leeren.

4. Verfahren nach Anspruch 3, wobei auf Grundlage eines Vergleichs zwischen dem Größenwert und einem zweiten Schwellenwert bestimmt wird, die RACK-Nachricht an den PRN weiterzugeben.

5. Verfahren nach Anspruch 4, wobei der erste Schwellenwert und der zweite Schwellenwert der gleiche Schwellenwert sind.

6. Weitergabeknoten (10) in einem Drahtlosnetzwerk, ausgelegt für Multi-Hop-Routing von Datenpaketen, wobei der Weitergabeknoten (19):
- konfiguriert ist zum Speichern eines Datenpakets, das von einem vorhergehenden Weitergabeknoten (PRN) in dem Netzwerk in einem Datenpaketzwischenspeicher empfangen wird; und
- konfiguriert ist zum Übertragen des zwischengespeicherten Datenpakets zu einem nachfolgenden Weitergabeknoten (SRN) in dem Netzwerk; und
- konfiguriert ist zum Empfangen einer Weitergabe-ACK-Nachricht (RACK-Nachricht), die dem übertragenen Datenpaket zugeordnet ist, von dem SRN; und
- konfiguriert ist zum Bestimmen, auf Grundlage der empfangenen RACK, ob das Datenpaket aus dem Datenpaketzwischenspeicher geleert werden soll,
wobei der Weitergabeknoten **dadurch gekennzeichnet ist, dass** er dazu konfiguriert ist, das Datenpaket aus dem Datenpaketzwischenspeicher zu leeren, wenn ein Timer, der mit einem vorbestimmten Zeitlimitwert beim Empfangen der RACK-Nachricht gesetzt wird, abgelaufen ist.

7. Weitergabeknoten nach Anspruch 9, wobei der Weitergabeknoten (10) dazu konfiguriert ist, das Datenpaket auf Grundlage von Informationen, die in der empfangenen RACK-Nachricht enthalten sind, aus dem Datenpaketzwischenspeicher zu leeren, wobei die Informationen einen Größenwert der Anzahl von Hops, die die RACK-Nachricht weitergegeben wurde, bereitstellen.

8. Weitergabeknoten nach Anspruch 7, wobei der Weitergabeknoten (10) dazu konfiguriert ist, das Datenpaket auf Grundlage eines Vergleichs zwischen dem Größenwert und einem ersten vorbestimmten Schwellenwert aus dem Zwischenspeicher zu leeren.

9. Weitergabeknoten nach Anspruch 8, wobei der Weitergabeknoten (10) dazu konfiguriert ist, die RACK-Nachricht auf Grundlage eines Vergleichs zwischen dem Größenwert und einem zweiten Schwellenwert an den PRN weiterzugeben.

10. Weitergabeknoten nach Anspruch 9, wobei der erste Schwellenwert und der zweite Schwellenwert der gleiche Schwellenwert sind.

## Revendications

1. Procédé mis en œuvre par un nœud relais dans un réseau sans fil conçu pour un routage multi-bonds de paquets de données, le procédé comprenant les étapes de :
- stockage S1 d'un paquet de données reçu en provenance d'un nœud relais précédent, PRN, dans le réseau dans une mémoire-tampon de paquets de données ;
- transmission S2 du paquet de données mis en mémoire-tampon vers un nœud relais suivant, SRN, dans le réseau ;
- réception S3, en provenance du SRN, d'un message ACK de relais, un message RACK associé audit paquet de données transmis ; et
- détermination S4, sur la base du RACK reçu, de la nécessité ou non de vider le paquet de données de la mémoire-tampon de paquets de données, le procédé étant **caractérisé en ce qu'**il est déterminé de vider ledit paquet de données de la mémoire-tampon de paquets de données si un temporisateur, réglé avec une valeur de temporisation prédéterminée à la réception dudit message RACK, a expiré.

2. Procédé selon la revendication 1, dans lequel il est déterminé de vider ledit paquet de données de la mémoire-tampon de paquets de données sur la base d'une information comprise dans le message RACK reçu, ladite information fournissant une mesure du nombre de bonds ayant été relayés par ledit message RACK.

3. Procédé selon la revendication 2, dans lequel il est déterminé de vider ledit paquet de données de la mémoire-tampon sur la base d'une comparaison entre ladite mesure et une première valeur de seuil prédéterminée.

4. Procédé selon la revendication 3, dans lequel il est déterminé de relayer le message RACK au PRN sur la base d'une comparaison entre ladite mesure et une seconde valeur de seuil.

5. Procédé selon la revendication 4, dans lequel ladite première valeur de seuil et ladite seconde valeur de seuil sont la même valeur de seuil.

6. Nœud relais (10) dans un réseau sans fil conçu pour un routage multi-bonds de paquets de données, dans lequel le nœud relais (19) est :
- configuré pour stocker un paquet de données reçu en provenance d'un nœud relais précédent, PRN, dans le réseau dans une mémoire-tampon de paquets de données ; et
- configuré pour transmettre le paquet de données mis en mémoire-tampon vers un nœud relais suivant, SRN, dans le réseau ; et
- configuré pour recevoir, en provenance du SRN, un message ACK de relais, un message RACK associé audit paquet de données transmis ; et
- configuré pour déterminer, sur la base du RACK reçu, s'il faut ou non vider le paquet de données de la mémoire-tampon de paquets de données.
le nœud relais étant **caractérisé en ce qu'**il est configuré pour vider ledit paquet de données de la mémoire-tampon de paquets de données si un temporisateur, réglé avec une valeur de temporisation prédéterminée à la réception dudit message RACK, a expiré.

7. Nœud relais selon la revendication 9, dans lequel le nœud relais (10) est configuré pour vider ledit paquet de données de la mémoire-tampon de paquets de données sur la base d'une information comprise dans le message RACK reçu, ladite information fournissant une mesure du nombre de bonds ayant été relayés par le message RACK.

8. Nœud relais selon la revendication 7, dans lequel le nœud relais (10) est configuré pour vider ledit paquet de données de la mémoire-tampon sur la base d'une comparaison entre ladite mesure et une première valeur de seuil prédéterminée.

9. Nœud relais selon la revendication 8, dans lequel le nœud relais (10) est configuré pour relayer le message RACK au PRN sur la base d'une comparaison entre ladite mesure et une seconde valeur de seuil.

10. Nœud relais selon la revendication 9, dans lequel ladite première valeur de seuil et ladite seconde valeur de seuil sont la même valeur de seuil.
